# EUROPEAN PATENT APPLICATION

(11) **EP 2 725 576 A1**
(43) Date of publication of application: **30.04.2014**
(21) Application number: 13151818.5
(22) Date of filing: 18.01.2013
(51) Int. Cl.: G10L 15/22

(54) **Image processing apparatus and control method thereof and image processing system.**

(30) Priority: 26.10.2012 KR 20120119634
(71) Applicant: Samsung Electronics Co., Ltd, Gyeonggi-do 443-742 (KR)
(72) Inventor: Lee, Joo-yeong, Gyeonggi-do (KR); Ban, Seok-ho, Gyeonggi-do (KR); Park, Sang-shin, Seoul (KR)
(74) Representative: Brandon, Paul Laurence

(57) **Abstract**

An image processing apparatus (100) is provided, the image processing apparatus (100) includes: a voice input unit (120) which receives a user's speech; a voice processor (170) which performs a preset operation according to a voice command corresponding to the user's speech; and a controller (190) which adjusts the preset operation of the voice command if the user's speech input into the voice input does not match the preset operation determined by the voice processor (170), and performs the adjusted preset operation that matches the user's speech according to the adjustment result.

## Description

### BACKGROUND

### 1. Field

Apparatuses and methods consistent with the exemplary embodiments relate to image processing apparatuses and control methods thereof and image processing systems which process an image signal such as a broadcasting signal supplied from the outside to display an image based on the processed image signal, and more particularly, to image processing apparatuses and control methods thereof and image processing systems which recognize a user's voice command to perform a function or operation corresponding to the voice command.

### 2. Description of the Related Art

An image processing apparatus processes image signals/image data supplied from external sources, according to various image processing operations. The image processing apparatus may display an image on its display panel based on the processed image signal or output the processed image signal to another display apparatus having a panel to display an image thereon based on the processed image signal. That is, as long as the image processing apparatus may process the image signal, it may include or not include a panel to display an image. The former case may be implemented as a TV and the latter case may be implemented as a set-top box.

The image processing apparatus is continuously added with functions and extending its functions in line with the development of technology. In such a trend, various configurations and methods are provided to input a user's desired command into the image processing apparatus. For example, in an image processing apparatus, if a user presses a key/button from a remote controller, a control signal is transmitted to the image processing apparatus to perform an operation as desired by a user. However, there is a need for an image processing apparatus that more quickly recognizes a user's input commands and intentions and more easily accepts various types of input commands.

### SUMMARY

Accordingly, one or more exemplary embodiments provide an electronic device, a server and a control method thereof which minimizes the time for recognizing a user's command and performing an operation.
The foregoing and/or other aspects may be achieved by providing an image processing apparatus including: an image processor which processes an image signal to display an image based on the processed image signal; a voice input which is configured to receive a user's speech; a voice processor which is configured to perform a preset operation according to a voice command corresponding to the user's speech; and a controller which is configured to adjust the preset operation of the voice command if the user's speech input into the voice input does not match the preset operation determined by the voice processor, and performs the adjusted preset operation that matches the user's speech according to the adjustment result.

The controller may provide a user interface (UI) for adjusting a designation state of the preset operation to the voice command, and may perform a second operation upon receiving an input of the user's speech if the preset operation designated for a voice command of a predetermined speech is adjusted from a first operation to a second operation through the UI.

The UI may guide or instruct a user to speak, and the controller may select one of a plurality of preset operations as the second operation corresponding to the voice command of the user's speech if the user's speech is input to the voice input according to the instructions to speak.

The UI may guide or instruct a user to manipulate a plurality of input buttons installed in a user input, and the controller may select an operation designated in advance for the input button manipulated according to the instructions to manipulate the plurality of input buttons installed in the user input, as the second operation out of the plurality of preset operations.

The UI may include a list of a plurality of preset operations, and the controller may select an operation selected from the list of the plurality of preset operations, as the second operation.

The UI may be provided to set a macro instruction for sequentially executing a plurality of operations corresponding to a plurality of speeches by inputting a single speech.

The controller may execute the macro instruction when the user's single speech corresponding to a first operation from among the plurality of preset operations included in the macro instruction, is input into the voice input.

The image processing apparatus may further including a communication component which is connected to a communication server, wherein the controller controls one of the voice processor and the server to process the voice command corresponding to the user's speech when the user's speech is input into the voice input.

The communication component may communicate with a speech-to-text (STT) server which converts the user's speech into a voice command including text, and the controller may transmit a voice signal of the user's speech to the STT server if the user's speech is input into the voice input unit, and may receive the voice command from the STT server corresponding to the user's speech.

The controller may control the voice processor to process the voice command if the voice command is a short sentence which includes a number of words that is less than a predetermined number of words, and may control the server to process the voice command if the voice command is a conversational sentence which includes a number of words that is greater than or equal to the predetermined number of words.

The image processing apparatus may further including a display which displays an image thereon based on the image signal processed by the image processor.

According to another aspect of an exemplary embodiment, there is provided a control method of an image processing apparatus including: receiving a user's speech; performing a preset operation under a voice command corresponding to the user's speech; and adjusting the preset operation of the voice command if the preset operation does not match the user's speech; and setting the image processing apparatus to perform the adjusted preset operation that matches the user's speech, according to the adjustment result.

The setting may include providing a user interface (UI) for adjusting a designation state of the preset operation with respect to the voice command; and, when the preset operation designated for a voice command of a predetermined user's speech is adjusted from a first operation to a second operation through the UI, setting the image apparatus to perform the second operation upon receiving the user's speech.

The UI may guide or instruct a user to speak, and the setting may include selecting one operation of the plurality of preset operations as the second operation corresponding to the voice command of the user's speech through the UI if the user's speech is input according to the instructions to speak.

The UI may guide or instruct a user to manipulate a plurality of input buttons installed in a user input of the image processing apparatus, and the setting may include selecting an operation designated in advance for the input button manipulated according to the instructions to manipulate the plurality of input buttons installed in the user input, as the second operation.

The UI may include a list of a plurality of preset operations, and the setting may include selecting an operation from the list of the plurality of preset operations, as the second operation.

The UI may be provided to set a macro instruction for sequentially executing a plurality of operations corresponding to a plurality of speeches by inputting a user's single speech.

The control method may further including executing the macro instruction if the user's speech corresponding to a first operation from among the plurality of preset operations included in the macro instruction, is input into the voice input.

The image processing apparatus may communicate with a server, and the performing the preset operation may include processing the voice command corresponding to the user's speech by one of the image processing apparatus and the server.

The image processing apparatus may communicate with an STT server which converts the user's speech into the voice command including text, and the inputting the user's speech may include transmitting a voice signal of the user's speech to the STT server; and receiving the voice command corresponding to the user's speech from the STT server.

The controlling may include controlling the image processing apparatus to process the voice command if the voice command is a short sentence which includes a number of words that is less than a predetermined number of words and controlling the server to process the voice command if the voice command is a conversational sentence which includes a number of words that is greater than or equal to the predetermined number of words.

According to another aspect of an exemplary embodiment, there is provided an image processing system including: an image processing apparatus which processes an image signal to display an image based on the processed image signal; a server which communicates with the image processing apparatus, wherein the image processing apparatus includes a voice input which receives a user's speech; a voice processor which performs a preset operation according to a voice command corresponding to the speech; and a controller which controls one of the voice processor and the server to process the voice command corresponding to the speech if the speech is input through the voice input, wherein the controller adjusts the preset operation of the voice command if the preset operation of the voice processor does not match the speech input to the voice input and performs the adjusted preset operation that matches the speech according to the adjustment result.

According to another aspect of an exemplary embodiment, there is provided an image processing apparatus including: a voice input which receives a user's voice command; a voice processor which determines a preset operation of an image processing apparatus corresponding to the user's voice command; and a controller which instructs the user to adjust the preset operation corresponding to the user's voice command when the preset operation determined by the voice processor does not match an operation indicated by the user's voice command, and adjusts the preset operation to match the operation indicated by the user's voice command.

The controller may provide a user interface (UI) for adjusting the preset operation to match the operation indicated by the user's voice command, and performs the adjusted operation upon receiving a subsequent input of the user's voice command.

The controller may also provide a second UI to set a macro instruction for sequentially executing a plurality of operations of the image processing apparatus corresponding to a user's single voice command.

The controller may execute the macro instruction if the user's single voice command is input into the voice input.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of a display apparatus according to an exemplary embodiment;

FIG. 2 is a block diagram showing an interaction structure of the display apparatus and a server in FIG. 1;

FIG. 3 illustrates an example of a database for operations corresponding to a voice command, as stored in the display apparatus or a conversational server in FIG. 2;

FIGS. 4 to 6 illustrate an example of user interfaces (UI) for setting a voice command in the display apparatus in FIG. 2;

FIG. 7 illustrates an example of a sequence in a macro instruction which may be set in a display apparatus according to an exemplary embodiment; and

FIGS. 8 to 12 illustrate an example of Uls for setting the macro instruction in FIG. 7.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

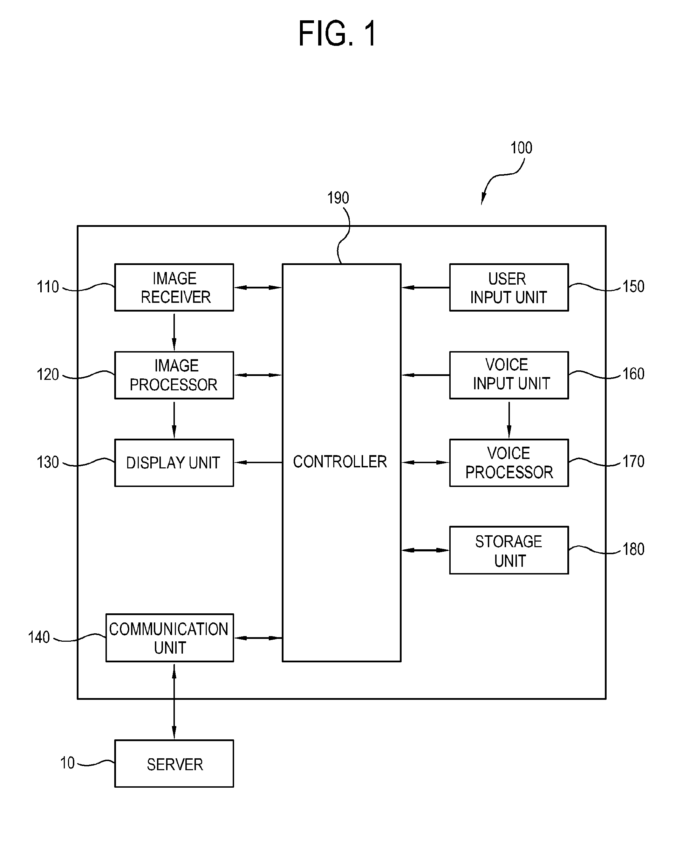

FIG. 1 is a block diagram of an image processing apparatus 100 according to an exemplary embodiment.

Below exemplary embodiments explain the image processing apparatus 100 which may display an image on its own, but the inventive concept may apply to other devices which do not display an image on their own, and instead output image signals/control signals to another display apparatus. Thus, the inventive concept is not limited to the below exemplary embodiments. An exemplary embodiment explains the image processing apparatus 100 which is implemented as a TV.

As shown in FIG. 1, the image processing apparatus 100 or the display apparatus 100 according to an exemplary embodiment receives an image signal from an image supply source (not shown). The image signal which may be received by the display apparatus 100 is not limited in type or nature, e.g., the display apparatus 100 may receive a broadcasting signal transmitted by a transmission apparatus (not shown) of a broadcasting station, tune the broadcasting signal and display a broadcasting image.

The display apparatus 100 includes an image receiver 110 which receives an image signal from an image supply source (not shown), an image processor 120 which processes an image signal received by the image receiver 110, according to a preset image processing operation, a display unit 130 which displays an image thereon based on the image signal processed by the image processor 120, a communication unit 140 which communicates with an external device such as a server 10, a user input unit 150 which is manipulated by a user, a voice input unit 160 which receive a voice or sound from the outside, a voice processor 170 which interprets and processes the voice/sound input to the voice input unit 160, a storage unit 180 which stores data/information therein, and a controller 190 which controls overall operations of the display apparatus 100.

The image receiver 110 receives image signals/image data in a wired or wireless manner, and transmits the image signals/image data to the image processor 120. The image receiver 110 may vary depending on a standard of a received image signal and a type of the display apparatus 100. For example, the image receiver 110 may receive a radio frequency (RF) signal or an image signal according to standards such as composite video, component video, super video, SCART, high definition multimedia interface (HDMI), DisplayPort, unified display interface (UDI) or wireless HD standard. If the image signal is a broadcasting signal, the image receiver 110 includes a tuner to tune the broadcasting signal per channel.

The image processor 120 processes the image signal received by the image receiver 110, according to various image processing operations. The image processor 120 outputs the processed image signal to the display unit 130, on which an image is displayed on the basis of the processed image signal. For example, if a broadcasting signal is tuned to a particular channel by the image receiver 110, the image processor 120 extracts image, voice, and additional data from the broadcasting signal corresponding to the channel, adjusts the image signal to a preset resolution and displays an image on the display unit 130.

The image processing operation of the image processor 120 may include, but is not limited to, a decoding operation corresponding to an image format of image data, a de-interlacing operation for converting interlaced image data into progressive image data, a scaling operation for adjusting image data into a preset resolution, a noise reduction operation for improving an image quality, a detail enhancement operation, a frame refresh rate conversion, etc.

The image processor 120 is implemented as a system-on-chip (SOC) which integrates the foregoing functions, or as an image processing board (not shown) which is formed by mounting individual elements on a printed circuit board (PCB) (not shown) to perform the foregoing image processing operations and is installed in the display apparatus 100.

The display unit 130 displays an image thereon based on an image signal output by the image processor 120. The display unit 130 may be implemented as various types of display panels including liquid crystal, plasma, light-emitting diode (LED), organic light-emitting diode (OLED), surface-conduction electron-emitter, carbon nano-tube, and nano-crystal, but is not limited thereto.

The display unit 130 may further include additional elements depending on its type. For example, the display unit 130 as an LCD may include an LCD panel (not shown), a backlight unit (not shown) to emit light to the LCD panel, and a panel driving substrate (not shown) to drive the LCD panel (not shown).

The communication unit 140 transmits and receives data for interactive communication between the display apparatus 100 and the server 10. The communication unit 140 is connected to the server 10 through wired/wireless wide/local area network or local connection by a communication protocol of the server 10.

The user input unit 150 transmits preset various control commands or information to the controller 190 by a user's manipulation and input. The user input unit 150 is implemented as a menu key or an input panel installed in an external part of the display apparatus 100, or a remote controller which is separated/spaced from the display apparatus 100. The user input unit 150 may otherwise be integrally formed in the display unit 130. If the display unit 130 is a touch screen, a user may touch the input menu (not shown) displayed on the display unit 130 to transmit a preset command to the controller 190.

The voice input unit 160 may be implemented as a microphone or other sound receiving device, and detects various sounds generated from the external environment of the display apparatus 100. The sound which is detected by the voice input unit 160 includes a user's speech and other sounds which are generated by various factors other than a user.

The voice processor 170 processes voices/sounds input into the voice input unit 160, out of the various preset processes performed by the display apparatus 100. The "voice" which is processed by the voice processor 170 means a voice input to the voice input unit 160. The image signal which is processed by the image processor 120 may include voice data, which are processed by the image processor 120.

If a voice/sound is input to the voice input unit 160, the voice processor 170 determines whether the input voice/sound resulted from a user's speech or was generated by other factors. Such a determination may use various configurations including a method of determining whether the input voice/sound has a wavelength/frequency band corresponding to a human voice, or a method of determining whether the input voice/sound falls under a user's voice profile that is designated in advance.

If it is determined that a user's speech has been input, the voice processor 170 performs a preset corresponding operation under the voice command corresponding to the speech. The voice command means the content spoken by a user. This will be described in detail later.

In an exemplary embodiment, the voice processor 170 and the image processor 120 are separately provided. However, this is a functional classification only for purposes of convenience to clearly explain the exemplary embodiment, and does not mean that the image processor 120 and the voice processor 170 are necessarily separated from each other in the display apparatus 100 which implements the concept of the exemplary embodiment. That is, the display apparatus 100 may include a signal processor (not shown) which integrates the image processor 120 and the voice processor 170.

The storage unit 180 stores data therein by a control of the controller 190. The storage unit 180 is implemented as a non-volatile memory such as a flash memory or a hard disc drive. The storage unit 180 is accessed by the controller 190, the image processor 120 or the voice processor 170, and data stored therein may be read/written/modified/deleted/updated by the controller 190, the image processor 120 or the voice processor 170.

Upon receiving a user's speech through the voice input unit 160, the controller 190 controls the voice processor 170 to process the input speech. The controller 190 determines whether the voice command corresponding to the speech is a short sentence or a conversational sentence, and according to the determination results, controls the voice processor 170 or the server 10 to process the voice command. More specifically, if the voice command is a short sentence, the controller 190 controls the voice processor 170 to process the voice command. If the voice command is a conversational sentence, the controller 190 transmits the voice command to the server 10 through the communication unit 140 to process the voice command by the server 10.

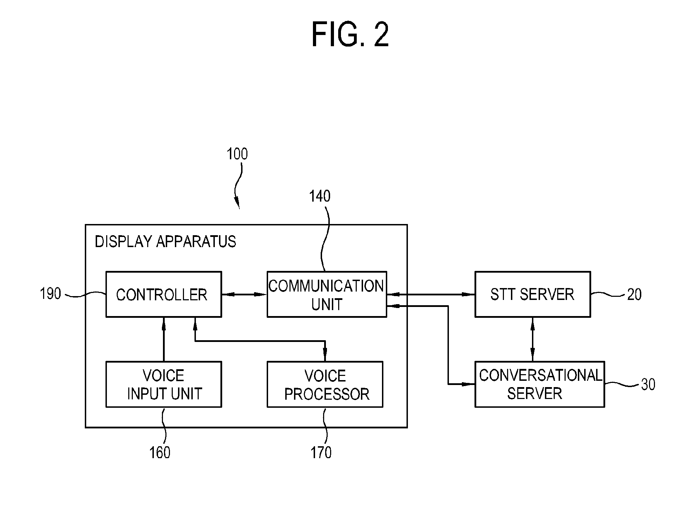

FIG. 2 is a block diagram showing an interaction structure of the display apparatus 100 and servers 20 and 30.

As shown therein, the display apparatus 100 includes a communication unit 140, a voice input unit 160, a voice processor 170 and a controller 190. Such configuration is the same as that explained in FIG. 1. The communication unit 140 is connected to the speech-to-text (STT) server 20 which converts a user's speech into a voice command, and to a conversational server 30 which analyzes a voice command to determine a corresponding operation of the voice command.

Upon receiving a voice signal, the STT server 20 analyzes a waveform of the voice signal and converts the content of the voice signal into a text. Upon receiving a voice signal of a user's speech from the display apparatus 100, the STT server 20 converts the voice signal into a voice command.

The conversational server 30 includes a database for various operations of the display apparatus 100 corresponding to voice commands. The conversational server 30 analyzes the voice command transmitted by the display apparatus 100, and transmits a control signal to the display apparatus 100 to perform an operation corresponding to the voice command.

If a user's speech is input to the voice input unit 160, the controller 190 transmits a voice signal of the speech to the STT server 20, and receives a voice command from the STT server 20 corresponding to the speech.

The controller 190 determines whether the voice command transmitted by the STT server 20 is a short sentence or a conversational sentence. If the voice command is a short sentence, the controller 190 controls the voice processor 170 to process the voice command. If the voice command is a conversational sentence, the controller 190 controls the conversational server 30 to process the voice command.

If the voice command is a short sentence, the voice processor 170 searches the database stored in the storage unit 180, by a control of the controller 190, to specify a function or operation of the display apparatus 100 corresponding to the voice command. The controller 190 controls the specified operation to be performed.

If the voice command is a conversational sentence, the controller 190 transmits the voice command to the conversational server 30. The conversational server 30 analyzes the voice command transmitted by the display apparatus 100 to specify the operation of the display apparatus 100. The conversational server 30 transmits the control signal for instructing the specified operation, to the display apparatus 100, which performs the operation according to the control signal.

Then, the preset corresponding operation of the display apparatus 100 is performed by the user's speech.

The process of selecting the processing subject of the voice command depending on whether the voice command is a short sentence or conversational sentence, may be due to system load and processing ability of the display apparatus 100. As the conversational sentence is a natural language, mechanical extraction of a desired corresponding operation within the voice command as the conversational sentence is not relatively easy. As it may not be easy to analyze the voice command as the conversational sentence by using the limited resources of the display apparatus 100, the voice command as the conversational sentence may be processed by the conversational server 30 to thereby process various speeches.

Such configuration may vary in design, and the process of at least one of the STT server 20 and the conversational server 30 may be performed by the display apparatus 100. For example, the display apparatus 100, not the servers 20 and 30, may convert a user's speech into a voice command or analyze a voice command as a conversational sentence.

With the foregoing configuration, the controller 190 controls the voice processor 170 or the conversational server 30 to perform a process of specifying an operation corresponding to the voice command of a user's speech. Hereinafter, the configuration of controlling the voice processor 170 by the controller 190 to specify the operation of the display apparatus 100 corresponding to the voice command will be described. The configuration of specifying the operation of the display apparatus 100 by the conversational server 30 corresponding to the voice command may employ an exemplary embodiment which will be described hereinafter.

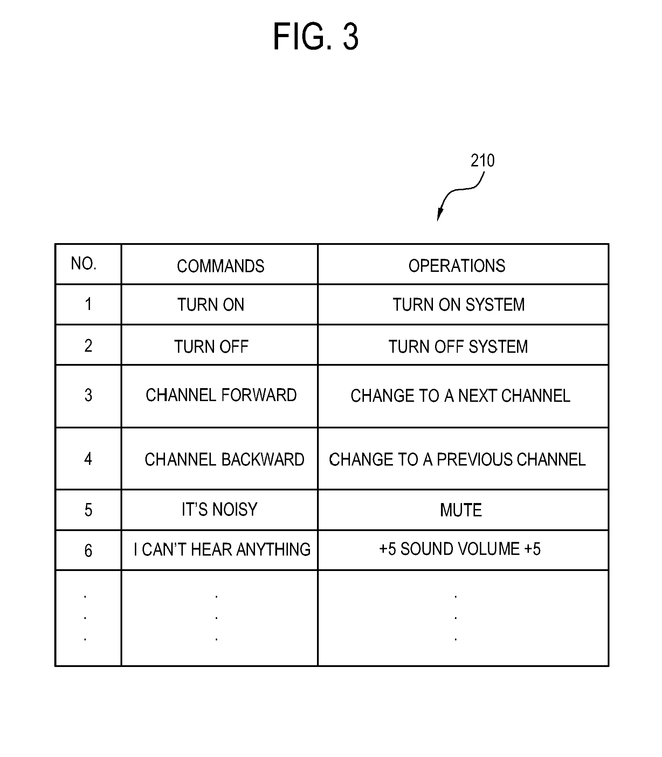

FIG. 3 illustrates an example of a database 210 stored in the display apparatus 100 or conversational server 30 regarding operations corresponding to voice commands.

As shown therein, the storage unit 180 stores therein the database 210 which matches voice commands corresponding to the user's speech, and various functions or operations performed by the display apparatus 100. The "operation" means any type of operation and function performed and supported by the display apparatus 100.

The controller 190 searches the database 210 based on a predetermined voice command and may determine which operation corresponds to the voice command.

The database 210 represents only one of data establishment principles or methods, and does not limit the exemplary embodiments. The database 210 as illustrated in the drawing indicates that one command corresponds to one operation, but this is only for purposes of convenience. The database 210 may indicate that a plurality of commands correspond to one operation. The reference numeral of the database 210 is named only for purposes of convenience.

For example, if a voice command corresponding to a user's speech is "turn on", the controller 190 may search the database 210 based on the voice command "turn on", and determine that the operation corresponding to the voice command "turn on" is "turn on system".

Then, the controller 190 may selectively perform the operation in consideration of the current state of the display apparatus 100. If the display apparatus 100 is already turned on, the controller 190 may not perform the operation "turn on system". If the display apparatus 100 is currently turned off, the controller 190 controls the display apparatus 100 to turn on system.

As another example, if a user says "it's noisy" while an image is displayed by the display apparatus 100, the controller 190 may specify that the operation corresponding to the voice command "it's noisy" is "mute" from the database 210. The controller 190 adjusts the volume of the displayed image to zero to perform the "mute" operation.

As another example, if a user says "I can't hear anything" while an image is displayed by the display apparatus 100, the controller 190 may determine that the operation corresponding to the command "I can't hear anything" is "raise volume to level 5" from the database 210. Then, the controller 190 raises the volume of the displayed image to the level 5.

By the foregoing method, the controller 190 may perform operations corresponding to the user's speech.

However, the foregoing configuration for recognizing the user's voice command may not always produce accurate results in interpreting all of the user's spoken words by using the voice recognition logic of the STT server 20 or voice processor 170 as users have different speaking habits and structures.

For example, if a user says "turn on", the STT server 20 may convert a voice signal of the speech into another voice command rather than the voice command "turn on." If the database 210 does not have the converted voice command, the controller 190 may not perform any operation corresponding to the voice command.

Otherwise, the converted voice command may be present in the database 210 but may be different from the user's voice command. For example, if a user has spoken "turn on" and the converted voice command is "turn off", the controller 190 may determine that the operation corresponding to the voice command is "turn off system". This results in turning off system of the display apparatus 100 unlike what has been intended by a user, in respect of the user's speech "turn on."

In consideration of the foregoing, the following method according to an exemplary embodiment is provided:

If the user's speech input to the voice input unit 160 does not match a corresponding operation, the controller 190 allows a user to adjust the corresponding operation with respect to the user's voice command. If the same speech is input later, the controller 190 performs the corresponding operation that matches the speech according to the adjustment results.

More specifically, upon occurrence of a preset event, the controller 190 provides a user interface (UI) for adjusting a setting state of the interconnection or correspondence between a user's voice command and a corresponding operation in the database 210. The preset event may include a user's manipulation of the user input unit 150 or a generation of a command requesting a UI as a result of the user's speech.

At an initial state where a first operation is designated for a predetermined first command, if the operation corresponding to the first command is adjusted to a second operation different from the first operation, through the UI, the controller 190 updates the database 210 according to the adjustment. If the voice command corresponding to the user's speech is the first command, the controller 190 performs the second operation, rather than the first operation, based on the updated database 210.

At an initial state where the first operation is designated for the first command, if a second command as a new voice command is designated for the first operation, the controller 190 updates the database 210 according to the adjustment. If the voice command corresponding to the user's speech is the first command or the second command, the controller 190 performs the first operation based on the updated database.

As a result, the voice recognition operation may be adjusted to be consistent with the user's intention.

Hereinafter, a method of changing a setting of a voice command through a UI will be described.

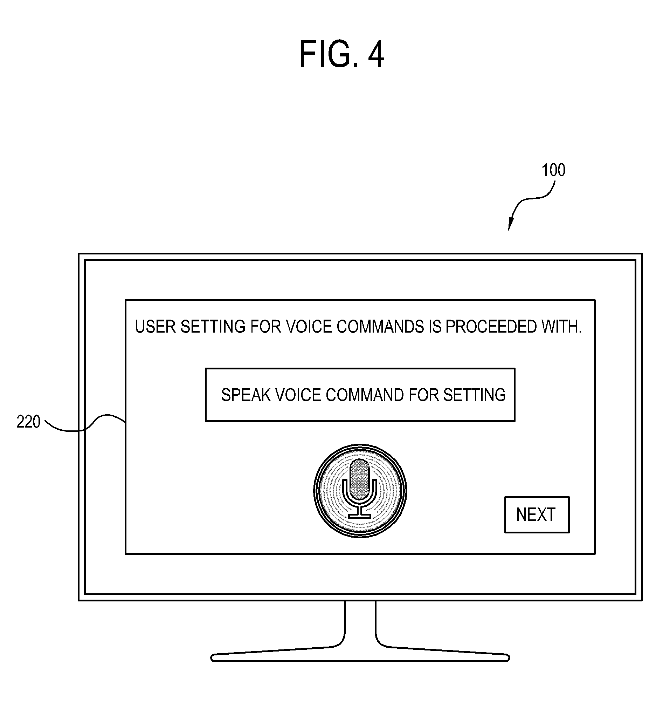

FIGS. 4 to 6 illustrate an example of Uls 220, 230 and 240 for setting a voice command.

As shown in FIG. 4, a user requests the controller 190 through the user input unit 150 to display the UI 220 to change a setting of the voice command corresponding to the speech. The controller 190 displays the UI 220.

The UI 220 includes information guiding a user to speak, to thereby specify a speech and voice command in which a user's setting is reflected. A user speaks the voice command while the UI 220 is displayed.

If a user's speech is input through the voice input unit 160 while the UI 220 is displayed, the controller 190 controls the voice processor 170 or the STT server 20 to convert the user's speech into a voice command.

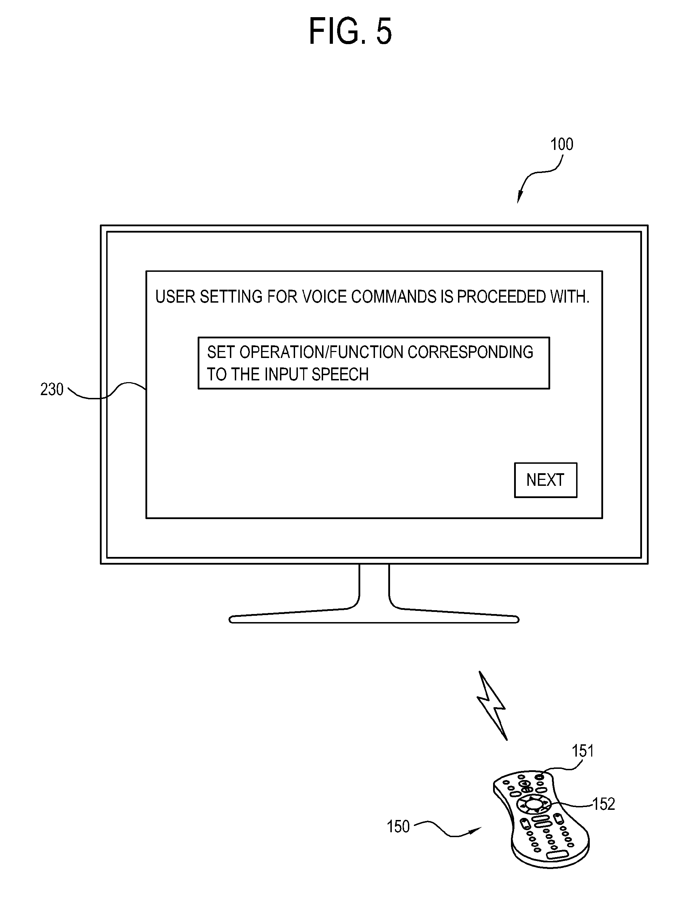

As shown in FIG. 5, the controller 190 displays the UI 230 which guides a user to designate a desired operation to specify the operation corresponding to the input voice command, out of various operations of the display apparatus 100 which are stored in the database 210 (refer to FIG. 3).

The UI 230 is provided for a user to select the operation corresponding to the voice command of the user's speech while the previous UI 220 (refer to FIG. 4) is displayed.

For example, the case where a user says "turn on" while the UI 220 (refer to FIG. 4) is displayed will be considered. A user presses a power button 151 of the user input unit 150 realized as a remote controller, in accordance with the guidance of the UI 230. The controller 190 matches the voice command into which the user's speech is converted, and the power button 151 manipulated by a user, and updates the database 210 (refer to FIG. 3).

As the power button 151 is a toggle type, if a user presses the power button 151, two types of results, i.e. turn on and turn off are performed. In this case, the UI 230 may additionally provide an option for selecting the turn on or turn off.

As another example, in the case where a user speaks the voice command "reduce volume" while the UI 220 (refer to FIG. 4) is displayed will be considered. A user presses a volume down button 152 of the user input unit 150 in accordance with the guidance of the UI 230. Then, the controller 190 adjusts to perform the operation of the volume down button 152 corresponding to the voice command "reduce volume".

That is, even if a user's speech is converted into a voice command that is different from the actual content, a user may designate or adjust the operation corresponding to the voice command, and as a result, the operation that matches a user's intention may be performed.

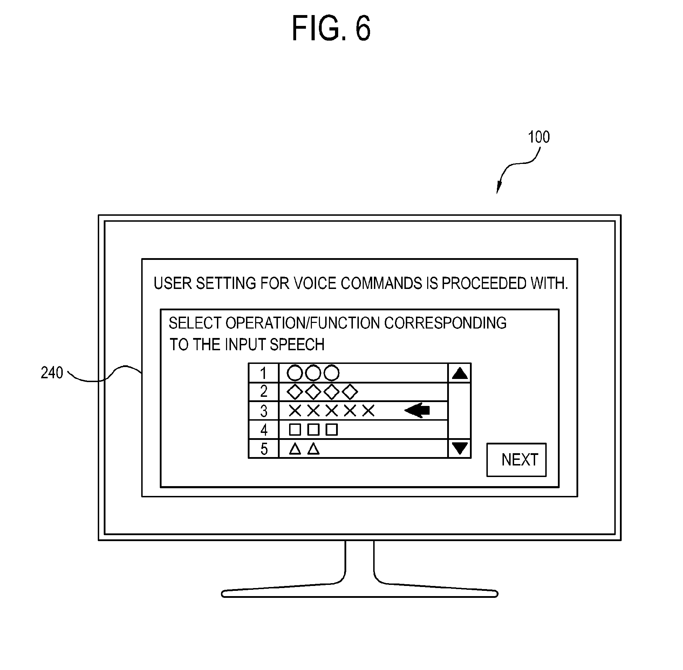

As shown in FIG. 6, in another aspect of an exemplary embodiment, if a user's speech is input while the UI 220 (refer to FIG. 4) is displayed, the controller 190 may display a UI 240 including a list of a plurality of preset operations to select an operation corresponding to the voice command with respect to the speech.

The method of displaying the list in the UI 240 may vary including displaying a plurality of operations in a preset order through a scrolling type list, or pop-up list or menu or a tree menu including sub-items so that a user may select one of several representative items.

In the foregoing method, while a specific voice command is set for the first operation in the database 210, the controller 190 may adjust the designation state for the voice command from the first operation to the second operation or add a new voice command to correspond to the first operation.

However, the first and second operations may be operations for adjusting the figure level for the same function but the level number may be different.

For example, in the case where a voice command "reduce volume" of a user's speech and a corresponding operation is an operation for reducing the current volume to a level 7 will be considered. If the level 7 is adjusted to a level 5 through a UI as explained above, the controller 190 updates the database 210 with the adjusted content.

If a user's speech of "reduce volume" is input later, the controller 190 reduces the volume to the level 5.

As above, updating the database 210 through the UI may reflect user's various intentions.

The controller 190 may set a macro instruction in which a plurality of operations corresponding to a plurality of the user's spoken words is sequentially performed by a single voice command, spoken word, or spoken sentence of the user.

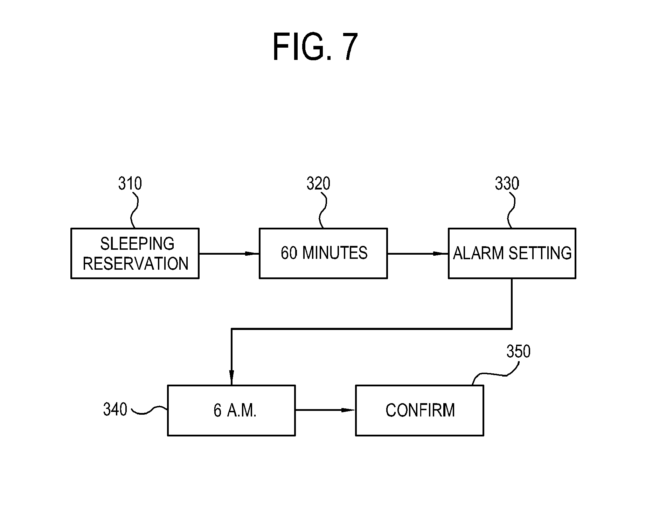

FIG. 7 illustrates an example of a sequence of a macro instruction according to an exemplary embodiment.

As shown therein, the controller 190 may provide a setting for the macro instruction to execute a plurality of operations sequentially, and this may be set by a user through a UI.

The implementation method of the UI may vary, e.g., the UI may be provided to sequentially select operations from the list of various present operations.

A case where a user sets a macro instruction for automatically executing a sleeping reservation and an alarm setting will be considered. In this case, the sequence of operations includes selection of a sleeping reservation function 310, a time for turning off system power of the display apparatus 100 320, selection of an alarm setting function 330, a time for alarming 340(e.g., ringing the alarm, notifying the user), and a setting of sequence completion 350.

Upon receiving a request for setting the macro instruction through a user's manipulation through the user input unit 150 or a user's speech through the voice input unit 160, the controller 190 displays a UI for setting the macro instruction.

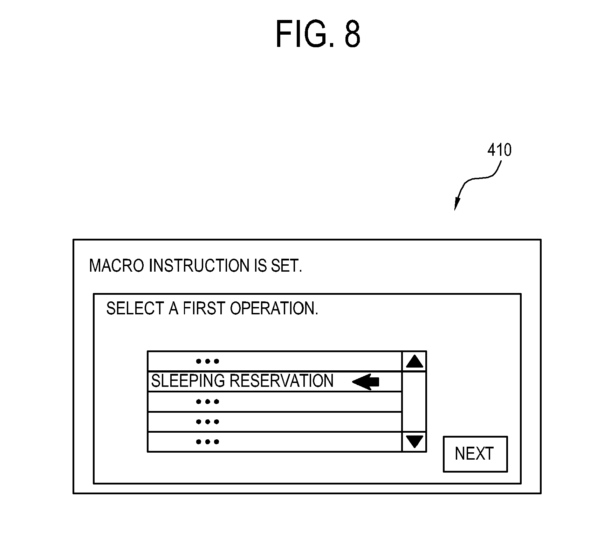

FIGS. 8 to 12 illustrate an example of Uls 410, 420, 430, 440 and 450 for setting a macro instruction.

As shown in FIG. 8, the controller 190 displays the UI 410 for selecting a first operation of the macro instruction. The UI 410 is provided to select one of a plurality of operations, and a user may manipulate the user input unit 150 or speak a voice command corresponding to the operation to select the first operation of the macro instruction. In an exemplary embodiment illustrated in FIG. 8, a user selects the "sleeping reservation" operation through the UI 410.

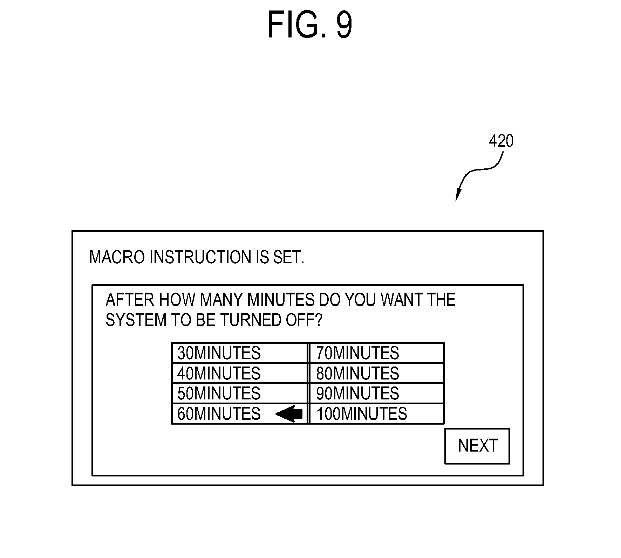

As shown in FIG. 9, if a user selects "sleeping reservation", the controller 190 displays the UI 420 for designating the time after which the display apparatus 100 is turned off.

The UI 420 is provided to select a plurality of preset time examples. Otherwise, the UI 420 may be provided for a user to input time through his/her speech or input time through the user input unit 150.

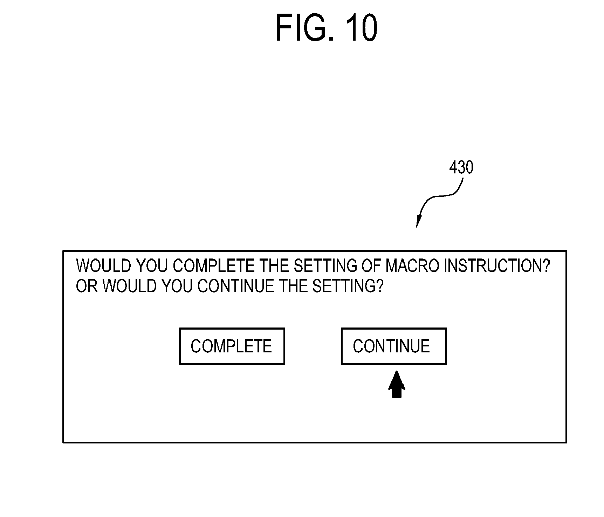

As shown in FIG. 10, the controller 190 displays the UI 430 for a user to select whether to complete the setting of the macro instruction including an operation sequence as explained above or to continue to set the macro instruction by adding operations.

A user may select "complete" to complete the setting of the macro instruction or select "continue".

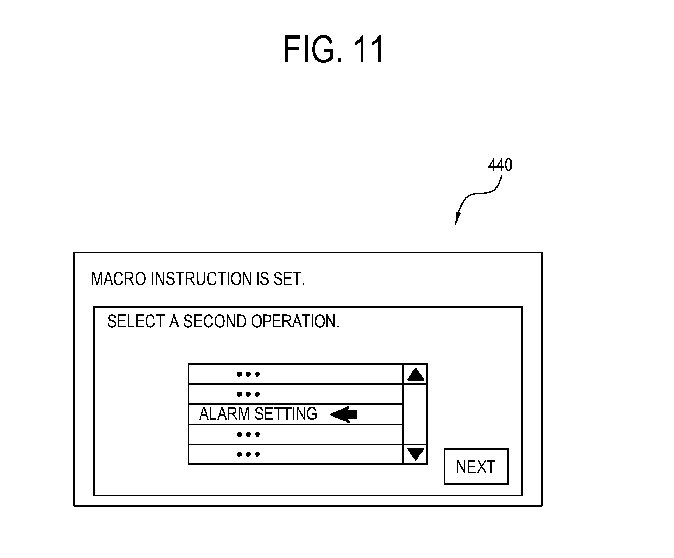

As shown in FIG. 11, if a user selects "continue" from the UI 430 (refer to FIG. 10), the controller 190 displays the UI 440 to a user to select a next operation of the macro instruction. The type of the UI 440 is substantially similar to the case in FIG. 8.

A user selects the "alarm setting" operation through the UI 440.

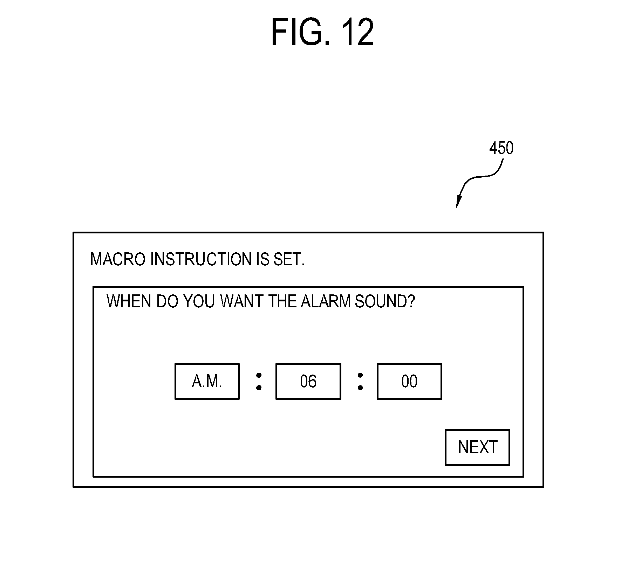

As shown in FIG. 12, the controller 190 displays the UI 450 for a user to designate the alarming time according to the selection of the previous selection of the "alarm setting" operation.

A user may input numbers through the user input unit 150 or speak numbers while the UI 450 is displayed, to thereby set the alarming time.

If the setting operations are completed, the controller 190 displays the UI 430 as shown in FIG. 10. If a user selects "complete", the controller 190 stores in the database of the storage unit 180 the macro instruction for setting the operations in the sequence as in FIG. 7.

If a user speaks a voice command corresponding to the first operation from the macro instruction, i.e., speaks the voice command falling under "sleeping reservation", the controller 190 sequentially performs the plurality of operations as set in the macro instruction. Otherwise, in the course of setting the macro instruction, a new voice command may be set for executing the macro instruction.

As above, the plurality of operations may be sequentially performed by a user's simple voice command.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. An image processing apparatus (100) comprising:
an image processor (120) which processes an image signal to display an image based on the processed image signal;
a voice input unit (160) which is configured to receive a user's speech;
a voice processor (170) which is configured to perform a preset operation according to a voice command corresponding to the user's speech; and
a controller (190) which is configured to adjust the preset operation of the voice command if the user's speech input to the voice input unit (160) does not match the preset operation by the voice processor (170), and performs the preset operation that matches the user's speech according to the adjustment result.

2. The image processing apparatus (100) according to claim 1, wherein the controller (190) is configured to provide a user interface (UI) for adjusting a designation state of the preset operation to the voice command, and to perform a second operation upon receiving an input of the user's speech if the preset operation designated for a voice command of a predetermined user's speech is adjusted from a first operation to a second operation through the UI.

3. The image processing apparatus (100) according to claim 2, wherein the UI is configured to guide a user to speak, and the controller selects one of a plurality of preset operations as the second operation corresponding to the voice command of the user's speech if the user's speech is input to the voice input unit (160) by the guidance of the UI.

4. The image processing apparatus (100) according to claim 3, wherein the UI is configured to guide a user to manipulate a plurality of input buttons installed in a user input unit, and the controller selects an operation designated in advance for the input button manipulated by the guidance, as the second operation out of the plurality of preset operations.

5. The image processing apparatus (100) according to claim 3, wherein the UI comprises a list of a plurality of preset operations, and the controller is configured to select the operation selected from the list, as the second operation.

6. The image processing apparatus (100) according to claim 1, wherein the UI is provided to set a macro instruction for sequentially setting the plurality of speeches and the plurality of operations corresponding to the plurality of speeches through a single speech.

7. The image processing apparatus (100) according to claim 6, wherein the controller (190) executes the macro instruction if the user's speech corresponding to a first operation is input among the plurality of preset operations comprised in the macro instruction.

8. The image processing apparatus (100) according to claim 1, further comprising a communication unit (140) which is connected to a server (10, 20) for communication, wherein the controller (190) controls one of the voice processor (170) and the server to process the voice command corresponding to the user's speech if the user's speech is input.

9. The image processing apparatus (100) according to claim 8, wherein the communication unit (140) communicates with a speech-to-text (STT) server (20) which converts the user's speech into a voice command of a text, and the controller is configured to transmit a voice signal of the user's speech to the STT server if the user's speech is input to the voice input unit (160), and receives the voice command from the STT server corresponding to the user's speech.

10. The image processing apparatus (100) according to claim 8, wherein the controller (190) controls the voice processor (170) to process the voice command if the voice command is a short sentence, and controls the server (10, 20) to process the voice command if the voice command is a conversational sentence.

11. The image processing apparatus (100) according to claim 1, further comprising a display unit (130) which displays an image thereon based on the image signal processed by the image processor (120).

12. A control method of an image processing apparatus (100) comprising:
receiving a user's speech;
performing a preset operation under a voice command corresponding to the user's speech; and
adjusting the preset operation of the voice command if the preset operation does not match the user's speech and setting to perform the preset operation that matches the user's speech, according to the adjustment result.

13. The control method according to claim 12, wherein the setting comprises providing a UI for adjusting a designation state of the preset operation with respect to the voice command; and, if the preset operation designated for a voice command of a predetermined user's speech is adjusted from a first operation to a second operation through the UI, setting to perform the second operation upon receiving the user's speech.

14. The control method according to claim 12, wherein the UI is provided to set a macro instruction for sequentially executing the plurality of speeches and the plurality of operations corresponding to the plurality of speeches through the user's speech.
